# DEMANDE DE BREVET EUROPEEN

(11) **EP 1 955 781 A1**
(43) Date de publication de la demande: **13.08.2008**
(21) Numéro de dépôt: 08151065.3
(22) Date de dépôt: 05.02.2008
(51) Int. Cl.: B05D 1/40, B05D 5/06, B05D 7/02

(54) **Ligne de fabrication de plaque de sol synthétique**

(30) Priorité: 06.02.2007 FR 0753095
(71) Demandeur: Coadou, Cyrille, 77320 Beton Bazoches (FR)
(72) Inventeur: Coadou, Cyrille, 77320 Beton Bazoches (FR)
(74) Mandataire: Intes, Didier Gérard André

(57) **Abrégé**

L'invention concerne la fabrication d'une plaque de sol en matériau synthétique à partir d'une plaque brute (1). On dépose puis on étale sur une surface (3) de la plaque brute une patine (10) sous forme visqueuse, et on brosse la surface revêtue de la patine de façon à créer des défauts visuels sur cette surface.

## Description

La présente invention concerne la fabrication d'une plaque de sol en matériau synthétique.

Plus précisément, l'invention concerne un procédé pour la fabrication d'une plaque de sol en matériau synthétique à partir d'une plaque brute.

Un revêtement de sol d'intérieur et d'extérieur doit posséder plusieurs propriétés : il doit avoir une bonne durabilité, en particulier ne pas être endommagé par les impacts de talons dus aux passages fréquents. Le revêtement ne doit pas non plus être endommagé par le poids de meubles et autres objets lourds posés dessus, ni être endommagé par les pieds du mobilier tel que chaises et tables, frottant sur le revêtement lors de leur déplacement répété. Il doit de plus être imperméable, être résistant aux produits d'entretien et aux taches, et être d'un nettoyage facile.

Le type de revêtement qui est le plus répandu pour sa résistance à l'abrasion et à divers produits chimiques, ce qui lui confère une excellente durabilité, et pour son nettoyage facile est le carrelage (céramique). De par ces qualités et sa résistance à l'humidité, le carrelage est le matériau de choix pour les sols de salles de bains et de cuisine. En revanche, le carrelage a le désavantage d'être d'un coût élevé, d'être sonore, et sa pose est longue et fastidieuse : après avoir préparé le support sur lequel sera posé le carrelage afin qu'il soit parfaitement plan et quasiment exempt de fissures, il faut découper une partie des carreaux de carrelage avec des outils particuliers devant être manipulés avec soin, afin de s'adapter aux contours de la pièce, il faut disposer les carreaux en les intercalant avec des croisillons, puis il faut combler les espaces entre chaque carreau avec un ciment à joints.

Un autre revêtement répandu est le parquet en lattes ou éléments plans en bois naturel. Il s'agit d'un matériau noble, esthétique, et d'une bonne durabilité. Cependant, tout comme le carrelage, il s'agit d'un revêtement onéreux, et dont la pose est longue est fastidieuse : nécessité de préparer le support, de découper une partie des lattes/carrés afin de s'adapter aux contours de la pièce (cette découpe devant être faite par sciage, ce qui génère notamment des poussières et des copeaux de sciure), d'effectuer une pose précise des différentes lattes/éléments.

Parallèlement aux revêtements naturels pour sols que sont la pierre, l'ardoise, la terre cuite, la céramique et le bois, il existe des revêtements synthétiques. Parmi ces matériaux synthétiques, le PVC (Polychlorure de Vinyle) et le stratifié sont les plus utilisés, notamment comme revêtement de surface dans les espaces publics, de par son faible prix et la simplicité de sa pose. Les revêtements synthétiques sont en outre résistants aux impacts de talons et de pieds de mobilier. Leur pose est aisée car elle nécessite un simple collage sur une surface plane, les découpes éventuellement nécessaires peuvent être réalisées avec un simple outil, de type cutter, sans générer de poussière. En revanche, même si des techniques telles que l'embossage permettent, en créant un relief sur le PVC, d'obtenir un état de surface tendant à imiter celui du carrelage ou du parquet, il est très difficile de donner aux matières synthétiques un aspect visuel suffisamment proche de celui d'une pierre, ardoise, terre cuite, ou d'un parquet en bois. Ces matières synthétiques sont donc souvent délaissées par des consommateurs malgré leur faible coût.

La présente invention vise à remédier à ces inconvénients en proposant un procédé qui permette de conférer à la surface d'une plaque d'un revêtement de sol en matériau synthétique un aspect imitant le plus fidèlement possible l'aspect naturel de matériaux tels que la pierre, l'ardoise, la terre cuite, ou le bois.

Ce but est atteint grâce au fait que ce procédé selon l'invention comprend le dépôt et l'étalement sur une surface d'une plaque brute d'une patine sous forme visqueuse, et le brossage de la surface revêtue de la patine de façon à créer des défauts visuels sur cette surface.

Grâce à ces dispositions, on obtient un revêtement de sol avec en surface des défauts visuels qui sont créés par le brossage de la patine, et qui reproduisent l'aspect de la pierre, de l'ardoise, de la terre cuite, ou du bois. De plus le brossage permet de révéler les reliefs de la surface de la plaque brute, d'où une reproduction plus fidèle. Le revêtement possède par ailleurs les bonnes propriétés de résistance à l'impact propres aux sols synthétiques. Le demandeur a même constaté que la patine améliore la résistance à l'abrasion du revêtement, et sa résistance aux produits chimiques, ce qui facilite son entretien. Un tel revêtement de sol constitue donc une alternative à la pierre, à l'ardoise, à la terre cuite, et au parquet particulièrement intéressante.

Avantageusement, le brossage est effectué par au moins une brosse à poils souples.

Les poils ne doivent pas être trop rigides pour ne pas trop endommager la patine, et doivent donc être souples. En même temps, ils doivent posséder une rigidité suffisante pour entamer la patine.

Avantageusement, le procédé comprend après brossage l'exposition de la patine sur une surface de la plaque brute à un rayonnement pour accélérer le séchage de la patine.

Par exemple, le rayonnement peut être un rayonnement UV (ultraviolets). Idéalement, la patine a une composition telle qu'elle sèche très rapidement sous l'action du rayonnement UV. La rapidité de séchage permet de fixer les défauts créés sur la patine par le brossage avant que la viscosité de la patine ne commence à résorber les défauts.

Avantageusement, le procédé comprend après brossage l'exposition de la patine (10) sur une surface (3) de la plaque brute (1) à l'air chaud pour accélérer le séchage de la patine.

Avantageusement la surface de la plaque brute sur laquelle est déposée la patine présente des reliefs irréguliers.

Ainsi, ces reliefs, qui peuvent être des protubérances ou des anfractuosités ou une combinaison des deux, contribuent à imiter la surface irrégulière de la pierre, de l'ardoise, de la terre cuite, ou du bois. Par ailleurs, après étalement de la patine, les protubérances et anfractuosités ne sont pas revêtus de la même épaisseur de patine. Cela affecte l'aspect de ces reliefs, et contribue à donner à la plaque l'apparence de la pierre, de l'ardoise, de la terre cuite, ou du parquet.

L'invention concerne également un dispositif pour la fabrication d'une plaque de sol en matériau synthétique à partir d'une plaque brute.

Selon l'invention, ce dispositif comprend des moyens pour déposer et étaler sur une surface de la plaque brute une patine sous forme visqueuse, et des moyens pour brosser la surface revêtue de la patine de façon à créer sur la surface des défauts visuels.

Avantageusement, les moyens pour déposer et étaler la patine sur une surface de la plaque brute comprennent au moins un rouleau applicateur.

L'utilisation d'un rouleau applicateur facilite le dépôt sur toute la surface de la plaque d'une quantité de patine la plus uniforme possible.

Avantageusement, les moyens pour brosser la surface de la plaque brute revêtue de la patine comprennent au moins une brosse montée rotative autour d'un axe de rotation sensiblement vertical.

L'utilisation d'une brosse montée rotative permet aux poils de la brosse de balayer efficacement toute la surface de la patine qui recouvre la plaque, de telle sorte que ces poils créent, grâce à leur souplesse, des défauts sur la patine qui sont uniformément répartis sur toute la surface de la plaque. Parallèlement, de par le caractère en partie aléatoire de la déformation des poils lorsqu'ils entrent en contact avec la patine, les défauts créés sur la patine varient d'une plaque à l'autre. Ce caractère aléatoire contribue à faire en sorte qu'en sortie du dispositif selon l'invention, les surfaces des plaques ne soient pas rigoureusement identiques. Ceci contribue à donner aux plaques l'apparence de la pierre, de l'ardoise, de la terre cuite, ou d'un parquet.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 illustre schématiquement un dispositif selon l'invention,
- les figures 2 et 3 illustrent schématiquement la formation d'une plaque dans un moule,
- la figure 4 est une vue en perspective illustrant le brossage de la patine d'une plaque par des brosses rotatives,
- la figure 5A montre l'agencement de plaques de sol hexagonales constituant un revêtement,
- la figure 5B montre une plaque de sol ayant l'apparence de plusieurs plaques de sol hexagonales juxtaposées,
- la figure 6 illustre la fabrication d'une plaque par extrusion et calandrage.

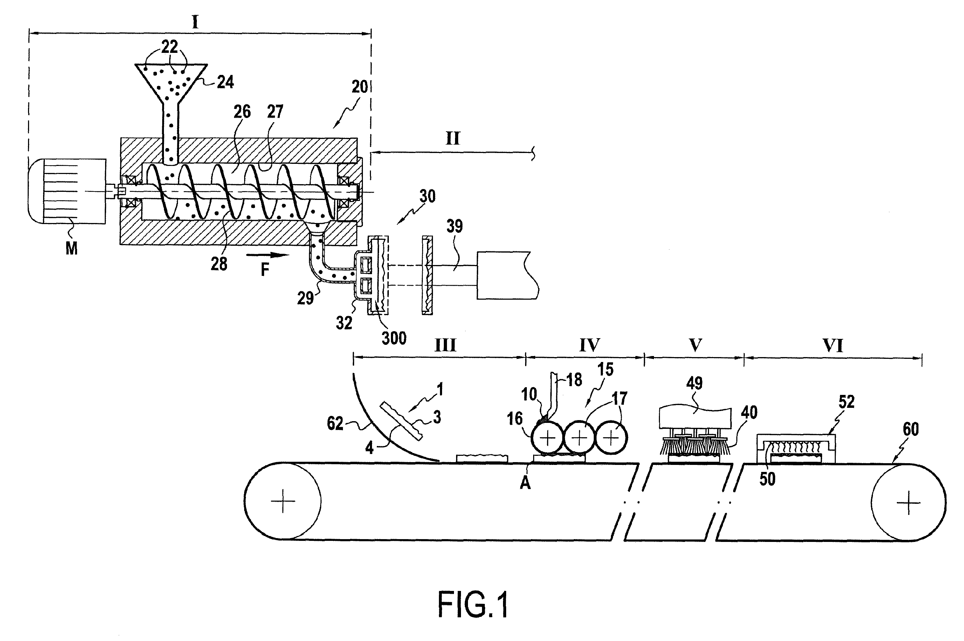

Sur la figure 1 est représenté un dispositif dans lequel sont réalisées les différentes étapes du procédé de fabrication selon l'invention. A l'étape I se trouve un injecteur 20. Cet injecteur est de conception classique, et seul son fonctionnement général sera décrit. Des granulats 22 de matière synthétique, par exemple de forme au moins approximativement sphérique, sont déposés dans une trémie d'alimentation 24 qui communique par son extrémité rétrécie avec l'intérieur de l'injecteur 20. La matière synthétique est par exemple du Polychlorure de Vinyle (PVC). La matière synthétique peut également être une résine de polyuréthane, en particulier un élastomère thermoplastique à base d'uréthane (Thermoplastique Polyuréthane ou TPU). La résine de polyuréthane peut être chargée de divers additifs, en particulier du kaolin, afin de modifier ses propriétés physiques et mécaniques. Le TPU possède une meilleure durée de vie comme revêtement de sol que le PVC, mais est plus cher. La matière synthétique peut aussi être une combinaison de PVC et de TPU, en particulier dans les proportions de 95% et 5% respectivement, ou de 5% et 95% respectivement. L'intérieur de l'injecteur 20 a la forme d'un alésage 26 cylindrique de paroi circonférentielle 27 dans lequel une vis sans fin 28, entraînée en rotation par un moteur M, tourne autour d'un axe horizontal confondu avec l'axe de symétrie de l'alésage 26. La circonférence de la vis sans fin 28 touche pratiquement la paroi 27 de l'alésage 26 de telle sorte qu'en tournant, la vis sans fin 28 pousse les granulats 22 dans le sens de la flèche F, soit vers la droite sur la figure 1. Un conduit 29, situé à l'extrémité de l'alésage 26 opposée à l'extrémité vers laquelle se situe la trémie 24, débouche dans l'alésage 26. Les granulats 22 (éventuellement fondus si des moyens de chauffage sont situés sur l'injecteur 20, voir ci-dessous) poussés par la vis sans fin 27, tombent dans le conduit 29.

L'injecteur 20 peut développer une pression allant de 5 tonnes à plus de 1000 tonnes pour la fabrication de plaques de grande superficie (plusieurs mètres carrés).

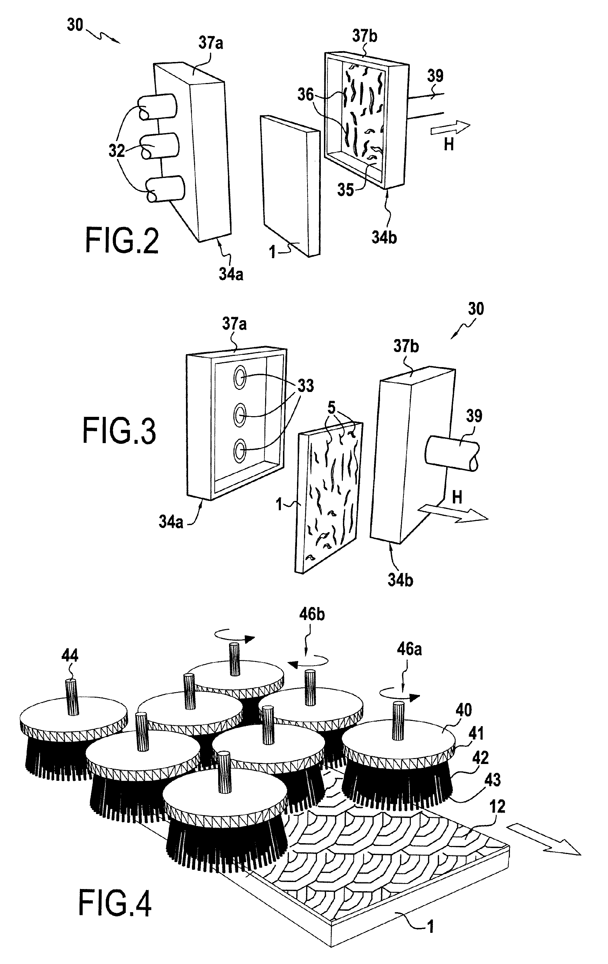

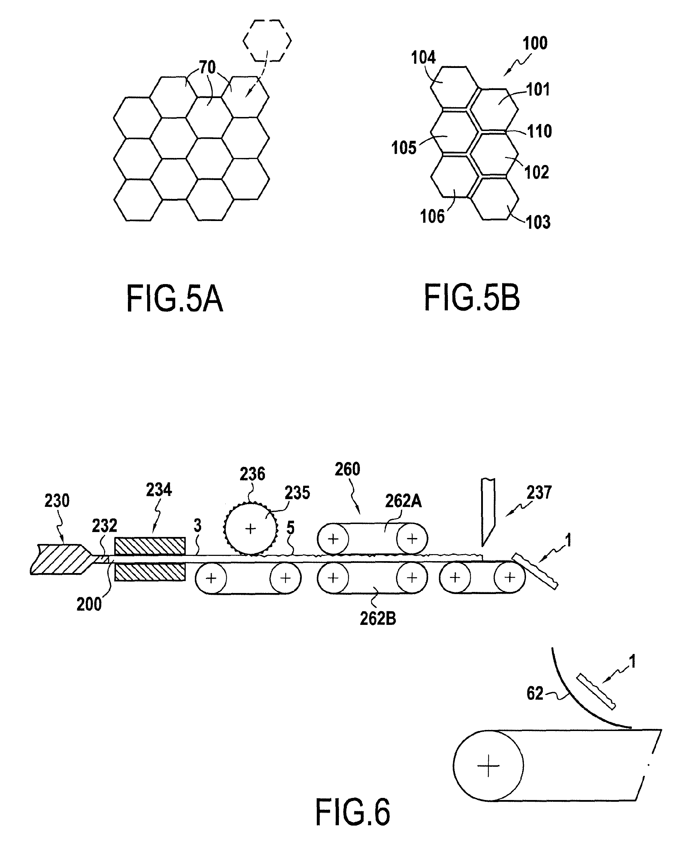

A l'étape II se trouve le moule 30, qui est également représenté sur les figures 2 et 3, et qui est destiné à mouler la plaque brute 1. Le moule 30 est de forme rectangulaire, mais peut aussi être de forme carrée ou de forme hexagonale selon la forme de la plaque souhaitée. Il peut avoir une forme permettant le moulage d'une plaque formant un assemblage d'éléments séparés par des rainures ayant l'apparence de joints, telle la plaque 100 visible sur la figure 5B. Le conduit 29, dont une des extrémités débouche dans l'alésage 26, se prolonge à son autre extrémité par des canaux 32, qui débouchent par des orifices 33 dans une première partie 34a du moule 30. Cette première partie comporte sur sa périphérie un premier bord 37a. Une seconde partie 34b du moule 30 comporte sur sa périphérie un second bord 37b. Cette seconde partie 34b du moule 30 est destinée à coopérer avec la première partie 34a. Lors de la coopération (position fermée), le premier bord 37a est en contact avec le second bord 37b de telle sorte que les deux parties de moule ainsi assemblées délimitent un volume fermé 300 (figure 1) qui n'est en relation avec l'extérieur du moule que par les canaux 32 et par un ou plusieurs trous (non représentés) permettant l'évacuation de l'air lors du remplissage du moule 30. Ce volume fermé 300 correspond au volume de la plaque brute 1 qui doit être moulée dans le moule 30, et correspond en l'espèce au volume d'un parallélépipède. La première partie 34a du moule 30 est fixe, et la seconde partie 34b est amenée en position fermée par translation, poussée par un vérin 39.

La face interne de la première partie 34a est plane, à l'exception des orifices 33, et est rectangulaire. La face interne 35 de la seconde partie 34b est plane ou, comme illustré sur la figure 2, comporte des irrégularités de surface 36. La face interne 35 est rectangulaire. Grâce à des moyens de chauffage (non représentés), les granulats sont fondus pour former une matière plastique qui pénètre dans le moule 30 à l'état pâteux ou liquide et remplit la totalité du volume fermé 300 délimité par la première partie 34a et la seconde partie 34b (ces moyens de chauffage peuvent se situer sur l'injecteur 20, ou sur le conduit 29). Pendant le remplissage du volume fermé 300, le vérin 39 exerce une pression de façon à maintenir la première partie 34a et la seconde partie 34b en position fermée, et éventuellement rapprocher davantage ces parties pour que le volume fermé 300 corresponde au volume désiré. Une fois la matière plastique compactée dans le moule pour former la plaque 1, et une fois le moule refroidit, celle-ci est démoulée.

Pour cela, le vérin 39 déplace la seconde partie 34b du moule 30 en translation selon la flèche H (vers la droite sur les figures 3 et 4), afin que la seconde partie 34b s'écarte de la première partie 34a, et libère ainsi la plaque 1. Dans le cas où la face interne 35 de la seconde partie 34b du moule 30 possède des irrégularités de surface 36, ces irrégularités forment, durant la réalisation de la plaque 1 dans le moule 30, des reliefs irréguliers 5 sur une surface 3 de la plaque brute 1. La face 4 de la plaque brute 1 opposée à la surface 3 est plane et lisse. Il convient de relever que les dessins montrent un moule dont la cavité est parallélépipédique, dans un souci de simplicité. D'autres formes pourraient être envisagées ainsi qu'il a été précédemment indiqué, et la face interne 35 peut présenter des nervures régulières pour former sur la plaque 1 des rainures imitant les joints. De plus, l'épaisseur de la plaque est ici exagérée, pour la clarté du dessin.

Alternativement, à la place d'un moule 30, le dispositif peut comprendre une extrudeuse 230 apte à extruder une bande 200 de matériau synthétique, comme représenté sur la figure 6. De manière classique, la matière synthétique est introduite dans l'extrudeuse 230 et en sort à travers l'orifice de sortie de la filière d'extrusion 232 de l'extrudeuse 230. Si nécessaire, la bande 200 extrudée passe alors dans un conformateur 234 qui le refroidit et stabilise sa forme. Elle passe ensuite sous une calandre 235 cylindrique située en aval du conformateur 234 dans la direction d'entraînement de la bande 200. L'entraînement de la bande 200 est réalisé à l'aide d'une tireuse 260 située en aval de la calandre 235, et comportant deux chenilles de tirage 262A et 262B coopérant respectivement avec la face supérieure et la face inférieure de la bande 200. La calandre 235 a la forme d'un cylindre d'axe horizontal perpendiculaire à la direction d'entraînement de la bande 200. La calandre 235 possède sur sa surface des protubérances 236 qui forment, lors du passage de la bande 200 sous la calandre, des reliefs irréguliers 5 sur la surface 3 de la face supérieure de la bande 200. De préférence, la bande 200 n'est pas encore complètement refroidie à la sortie du conformateur 234, ce qui favorise la formation de ces reliefs par la calandre 235. La bande 200 est ensuite découpée en plaques 1 par une coupeuse 237 située en aval de la tireuse 260 dans la direction d'entraînement de la bande 200.

A l'étape III la plaque 1, qui a été libérée du moule 30, ou alternativement est sortie de la coupeuse 237 (figure 6), et est maintenant refroidie, est amenée par des moyens appropriés, par exemple une rampe 62 sur un convoyeur 60, de telle sorte que la surface 3 de la plaque 1 est orientée vers le haut, c'est-à-dire que la face 4 de la plaque brute 1 est en contact avec le convoyeur 60.

A l'étape IV la plaque 1 est amenée par le convoyeur 60 vers des moyens 15 pour déposer et étaler une patine 10 sur la surface 3 de la plaque brute 1. La patine comprend par exemple de la lasure (vernis) incolore ou coloré, des colorants ou pigments (par exemple rouge, bleu, gris, vert), et un solvant. La patine est par exemple une des dénominations suivantes de la marque "Syntilor-Blanchon" : Basalmine (1000g de lasure incolore, 16g de colorant rouge, 250g de lasure blanchon, 5000g de chlore), Autumn (1200g de lasure blanchon, 12g de colorant noir, 14g de colorant rouge, 5000g de chlore), Terre cuite (2000g de lasure blanchon, 200g de colorant noir, 10g de chlorure), Pierre (2000g de lasure blanchon, 5000g de chlorure), Gazania (2000g de lasure satinée bondex-chêne-722, 5000g de chlorure, colorant noir), Chêne rustique. Les moyens 15 sont constitués d'un ou plusieurs rouleaux dont les axes A sont parallèles au plan moyen de la surface 3, et perpendiculaires à la direction d'entraînement du convoyeur 60. Le plan moyen de la surface 3 est défini comme le plan parallèle à la face 4 situé à une distance de la face 4 qui est la moyenne des distances de chacun des points de la surface 3 à la face 4. Au moins un de ces rouleaux est un rouleau applicateur 16. Sur la figure 1 les moyens 15 comportent un rouleau applicateur 16 et deux rouleaux lisseurs 17. La patine 10, sous forme suffisamment peu visqueuse pour s'approcher de l'état liquide, s'écoule d'un tuyau 18 dont la sortie a avantageusement une largeur légèrement inférieure à la longueur du rouleau 16 et se dépose sur la partie supérieure du rouleau applicateur 16, dont la longueur est légèrement supérieure à la dimension de la plaque 1 selon l'axe A. Le rouleau applicateur 16 est en rotation autour de son axe A, et en tournant, il entraîne la patine 10 et vient la déposer sur la surface 3. La distance entre le rouleau 16 et le plan moyen de la surface 3 est telle que, lorsque la plaque passe sous le rouleau 16, une quantité de patine 10 juste suffisante pour former un film sur la totalité de la surface 3 de la plaque brute 1 et pour recouvrir les reliefs irréguliers 5 est déposée sur la surface. Ainsi, les anfractuosités de la surface 3 sont remplies par la patine 10. Le cas échéant, un ou plusieurs rouleaux lisseurs 17 situés en aval du rouleau applicateur 16 dans la direction d'entraînement du convoyeur 60 enlèvent un excès éventuel de patine 10 sur la surface 3, et lissent la patine 10 afin que la surface supérieure de celle-ci soit parallèle au plan moyen de la surface 3. La rotation des rouleaux 16, 17 est de préférence automatique. Elle peut aussi être manuelle.

La patine 10 peut-être alternativement déposée en plusieurs couches successives, les couches étant éventuellement de compositions différentes. Dans ce cas, les moyens 15 pour déposer et étaler la patine comporteront en succession autant de groupes de tuyau 18, rouleau applicateur 16 et de rouleaux lisseurs 17, qu'il y a de couches de patine à déposer.

De manière complémentaire en alternative au rouleau 16, les moyens pour déposer la patine 10 sur la surface 3 de la plaque brute 1 peuvent comprendre au moins un pulvérisateur qui pulvérise la patine 10 sur la surface 3. En variante, la patine peut également être déposée manuellement, en étalant la patine sur toute la surface 3 par des mouvements circulaires.

A l'étape V est effectué le brossage de la patine 10. Comme illustré sur la figure 1, la plaque brute 1 dont la surface 3 est revêtue de la patine 10 est ensuite amenée par le convoyeur 60 vers les moyens de brossage, situés en aval des moyens 15. La figure 4 montre les moyens de brossage, qui comprennent au moins une brosse 40 comportant une tige 44 rotative autour de son axe de symétrie qui est sensiblement perpendiculaire au plan moyen de la surface de la plaque brute. La tige 44 est donc sensiblement verticale. Sur la figure 4, les moyens de brossage comprennent six brosses 40. Ces brosses effectuent un brossage mécanique de la patine 10 qui revêt la surface 3 de la plaque brute 1. Les brosses 40 sont entraînées en rotation par un dispositif d'entraînement 49 qui est fixe par rapport au support du convoyeur 60, c'est-à-dire que le convoyeur 60 se déplace par rapport au dispositif d'entraînement 49 et par rapport aux axes de rotation des brosses 40. Chaque brosse 40 comporte donc une tige 44, et un plateau 41 fixé sous la tige 44. Chaque plateau 41 comporte sur sa face inférieure des poils 42 qui y sont fixés par une de leurs extrémités, l'extrémité supérieure. Les poils 42 sont, au repos, sensiblement perpendiculaires au plateau 41. Les poils 42 sont sensiblement de même longueur et sont, au repos, sensiblement parallèles entre eux de telle sorte que leurs extrémités inférieures 43 se situent dans un même plan parallèle au plateau 41, au plan moyen de la surface 3 de la plaque brute 1, et à la surface supérieure de la patine 10. Les brosses 40 sont circulaires, c'est-à-dire que les plateaux 41 sont circulaires et que, sur chaque plateau 41, les poils 42 sont répartis avec une symétrie de révolution autour de l'axe de rotation de la brosse 40. Les brosses 40 des moyens de brossage peuvent également avoir une forme autre que circulaire, par exemple être carrées, ovales, ou rectangulaires. Les poils 42 des brosses 40 sont souples : ils ne doivent pas être trop rigides pour ne pas trop endommager la patine. Ils doivent cependant posséder une rigidité suffisante pour entamer la patine 10. Les poils 42 peuvent par exemple être en crin de cheval d'une longueur de 30 à 40 mm (millimètres). Ils peuvent aussi être en nylon d'une longueur de 30 à 40 mm, ou en soie d'une longueur d'environ 5 mm.

La distance entre les brosses 40 et le plan moyen de la surface 3 est telle que lors du passage de la plaque brute 1 sous les brosses 40, et au fur et à mesure que la plaque brute 1 est entraînée par le convoyeur 60, les extrémités inférieures 43 des poils 42 des brosses viennent entamer la couche de patine 10, et créent sur la patine 10 des défauts visuels 12 imitant de façon satisfaisante la surface d'un carrelage ou d'un parquet. Ces défauts visuels ainsi créés ont une profondeur qui dépend de la rigidité et de la longueur des poils 42, et de la distance entre les brosses 40 et le plan moyen de la surface 3.

Les brosses 40 peuvent toutes tourner dans le même sens, ou les moyens de brossage peuvent comporter au moins deux brosses contrarotatives 46a, 46b, c'est-à-dire que la brosse 46a tourne dans le sens inverse de la brosse 46b. Comme représenté sur la figure 4, les brosses 40 sont disposées en quinconce et recouvrent toute la surface de la plaque brute 1. Les brosses 40 peuvent également être disposées aux noeuds d'un maillage carré, orienté par exemple parallèlement à la direction d'entraînement du convoyeur 60. Les moyens de brossage décrits ci-dessus effectuent le brossage de façon automatique. Le brossage pourrait également être effectué manuellement. Les poils 42 décrivent sur la patine des trajectoires circulaires. Les moyens de brossage pourraient également être tels que les trajectoires des poils 42 soient rectilignes, ou aléatoires.

A l'étape VI la plaque brute 1 est entraînée par le convoyeur 60 vers des moyens qui émettent des rayonnements aptes à accélérer le séchage de la patine 10 revêtant la surface 3 de la plaque brute 1. Ces moyens sont constitués d'un ou plusieurs émetteurs de rayonnements 50 situés dans un tunnel 52. Les rayonnements émis par l'émetteur 50 sont des rayons ultraviolets (UV), ou tout autre rayonnement susceptible d'accélérer le séchage de la patine 10. La plaque brute 1 est entraînée par le convoyeur 60 dans le tunnel 52, où elle passe le temps nécessaire pour que la patine 10 soit sèche. Le convoyeur entraîne ensuite la plaque brute 1 hors du tunnel 52.

Alternativement, la patine 10 peut être séchée par exposition à un air chaud provenant de moyens pour émettre de l'air chaud (par exemple une soufflerie ou un four), ou en la laissant à l'air libre.

En aval du tunnel 52 dans la direction d'entraînement du convoyeur 60, la plaque brute 1 peut, le cas échéant, être entraînée par le convoyeur 60 vers un poste de façon à recevoir sur la patine 10 revêtant la surface 3 de la plaque brute 1 une couche de vernis incolore apte à renforcer la résistance à l'abrasion de la patine 10.

A l'issue de procédé de fabrication, les plaques brutes 1 revêtues de la patine 10 sont prêtes à être disposées sur le sol comme plaques de sol 70. La figure 5A illustre l'agencement sur le sol de telles plaques de sol 70 lorsqu'elles ont une forme hexagonale. La figure 5B illustre une plaque 100 dont le périmètre est celui d'une figure faite de six hexagones réguliers 101, 102, 103, 104, 105, 106, disposés de la façon suivante : le premier hexagone 101 a un côté en commun avec le deuxième hexagone 102, qui a lui-même un côté en commun avec le troisième hexagone 103 de telle sorte que les trois hexagones 101, 102, 103, soient alignés. Le quatrième hexagone 104 est disposé de façon à avoir un côté en commun avec le premier hexagone 101, le cinquième hexagone 105 est disposé de façon à avoir un côté en commun avec le quatrième hexagone 104, avec le premier hexagone 101 et avec le deuxième hexagone 102. Le sixième hexagone 106 est disposé de façon à avoir un côté en commun avec le cinquième hexagone 105, le deuxième hexagone 102, et le troisième hexagone 103.

La plaque 100 est d'un seul tenant, fabriquée dans un moule 30 ayant la forme de cette plaque. Par ailleurs, la face 35 du moule comporte des reliefs qui, lors de la fabrication de la plaque 100, forment le long de chacun des côtés communs 110 entre deux hexagones 101, 102, 103, 104, 105, ou 106, une rainure ayant l'apparence d'un joint. Ainsi, une fois posée sur le sol, la plaque 100 semble être constituée de six hexagones reliés par des joints, alors qu'elle est d'un seul tenant. Un sol peut ainsi être recouvert de plusieurs plaques 100 juxtaposées, ce qui accélère la pose et limite le nombre de joints à effectuer entre les plaques, puisque chaque plaque 100 a une superficie plus importante qu'un hexagone seul.

De manière similaire, on peut fabriquer dans un moule approprié une plaque 100 ayant l'apparence de plusieurs éléments de forme carrée ou de forme rectangulaire juxtaposés.

La fabrication des plaques 1 décrite ci-dessus est faite en utilisant un procédé d'injection haute ou basse pression. Les plaques peuvent également être fabriquées par d'autres procédés, comme par exemple la coulée basse pression : dans ce cas le matériau composant la plaque résulte de la réaction de deux composants, par exemple un durcisseur et un isocyanate (plus éventuellement un colorant), ces deux composants étant versés simultanément dans un moule ouvert horizontal comportant sur la face constituant son fond des irrégularités de surface.

## Revendications

1. Procédé pour la fabrication d'une plaque de sol en matériau synthétique à partir d'une plaque brute (1), **caractérisé en ce qu'**il comprend le dépôt et l'étalement sur une surface (3) de ladite plaque brute d'une patine (10) sous forme visqueuse, et le brossage de la surface revêtue de la patine de façon à créer des défauts visuels sur ladite surface.

2. Procédé selon la revendication 1, **caractérisé en ce que** ladite patine comprend de la lasure, des colorants ou pigments, et un solvant.

3. Procédé selon la revendication 1 ou 2, **caractérisé en ce que** le brossage est effectué par au moins une brosse (40) à poils souples (42).

4. Procédé selon l'une quelconque des revendications 1 à 3, **caractérisé en ce que** le brossage est effectué manuellement.

5. Procédé selon la revendication 3, **caractérisé en ce que** le brossage est effectué mécaniquement à l'aide d'au moins une brosse rotative autour d'un axe de rotation (44) sensiblement perpendiculaire à la surface (3) de ladite plaque brute (1).

6. Procédé selon l'une quelconque des revendications 1 à 5, **caractérisé en ce qu'**il comprend après brossage l'exposition de la patine (10) sur une surface (3) de ladite plaque brute (1) à un rayonnement pour accélérer le séchage de la patine.

7. Procédé selon l'une quelconque des revendications 1 à 5, **caractérisé en ce qu'**il comprend après brossage l'exposition de la patine (10) sur une surface (3) de ladite plaque brute (1) à l'air chaud pour accélérer le séchage de la patine.

8. Procédé selon l'une quelconque des revendications 1 à 7, **caractérisé en ce que** ladite plaque brute (1) est obtenue par moulage.

9. Procédé selon l'une quelconque des revendications 1 à 8, **caractérisé en ce que**, avant le dépôt de la patine, il est formé à la surface (3) de ladite plaque brute (1) sur laquelle est déposée la patine (10), des reliefs irréguliers (5).

10. Dispositif pour la fabrication d'une plaque de sol en matériau synthétique à partir d'une plaque brute, **caractérisé en ce qu'**il comprend des moyens (15) pour déposer et étaler sur une surface (3) de ladite plaque brute une patine (10) sous forme visqueuse, et des moyens (40) pour brosser ladite surface revêtue de la patine de façon à créer sur ladite surface des défauts visuels (12).

11. Dispositif selon la revendication 10, **caractérisé en ce qu'**il comprend un moule (30) ayant une face interne (35) présentant des irrégularités de surface (36) aptes à former, sur une surface (3) d'une plaque brute (1) réalisée dans ce moule, des reliefs irréguliers (5).

12. Dispositif selon la revendication 10, **caractérisé en ce qu'**il comprend une extrudeuse (230) apte à extruder une bande (200) de matériau synthétique destinée à former une plaque brute (1), et une calandreuse (235) apte à former, sur une surface (3) de la bande (200) extrudée dans l'extrudeuse (230), des reliefs irréguliers (5).

13. Dispositif selon l'une des revendications 10 à 12, **caractérisé en ce que** lesdits moyens (15) pour déposer et étaler la patine (10) sur une surface (3) de ladite plaque brute (1) comprennent au moins un rouleau applicateur (16) et/ou un pulvérisateur.

14. Dispositif selon l'une quelconque des revendications 10 à 13, **caractérisé en ce que** lesdits moyens (40) pour brosser la surface (3) de la plaque brute (1) revêtue de ladite patine (10) comprennent au moins une brosse montée rotative (40) autour d'un axe de rotation (44) sensiblement vertical.

15. Dispositif selon la revendication 14, **caractérisé en ce que** lesdits moyens (40) pour brosser la surface (3) de la plaque brute (1) revêtue de ladite patine (10) comprennent au moins deux brosses contrarotatives (46a, 46b).

16. Dispositif selon la revendication 14 ou 15, **caractérisé en ce que** lesdits moyens (40) pour brosser la surface (3) de la plaque brute (1) revêtue de ladite patine (10) comprennent une pluralité de brosses rotatives (40) ayant chacune un axe de rotation (44) sensiblement vertical, et disposées en quinconce.

17. Dispositif selon l'une quelconque des revendications 10 à 16, **caractérisé en ce qu'**il comprend en outre des moyens (50) pour émettre un rayonnement et pour exposer la patine (10) sur une surface (3) de ladite plaque brute (1) audit rayonnement afin d'accélérer le séchage de la patine.

18. Dispositif selon l'une quelconque des revendications 10 à 16, **caractérisé en ce qu'**il comprend en outre des moyens pour émettre de l'air chaud et pour exposer la patine (10) sur une surface (3) de ladite plaque brute (1) audit air chaud afin d'accélérer le séchage de la patine.

19. Dispositif pour la fabrication de plaques de sol en matériaux synthétiques selon l'une quelconque des revendications 10 à 18, **caractérisé en ce qu'**il comprend un convoyeur (60) apte à supporter la plaque brute (1) et **en ce que** les moyens (15) pour déposer et étaler la patine (10), et les moyens (40) pour brosser, sont disposés dans des postes successifs, sur le trajet de convoyeur (60).
